Europäisches Patentamt

European Patent Office

Office européen des brevets

(19)

(11) EP 1 509 557 B1

(12) FASCICULE DE BREVET EUROPEEN

(45) Date de publication et mention
de la délivrance du brevet:
**21.12.2005 Bulletin 2005/51**

(21) Numéro de dépôt: **03727363.8**

(22) Date de dépôt: **25.04.2003**

(51) Int Cl.[7]: **C08F 236/04**, C08F 4/54,
C08F 36/04

(86) Numéro de dépôt international:
**PCT/EP2003/004314**

(87) Numéro de publication internationale:
**WO 2003/097708 (27.11.2003 Gazette 2003/48)**

(54) **SYSTEME CATALYTIQUE POUR PREPARER DES POLYBUTADIENES ET PROCEDE DE PREPARATION**

KATALYSATORSYSTEM UND VERFAHREN ZUR HERSTELLUNG VON POLYBUTADIEN

CATALYTIC SYSTEM FOR PREPARING POLYBUTADIENES AND PREPARATION METHOD

(84) Etats contractants désignés:
**AT BE BG CH CY CZ DE DK EE ES FI FR GB GR
HU IE IT LI LU MC NL PT RO SE SI SK TR**

(30) Priorité: **16.05.2002 FR 0206244**

(43) Date de publication de la demande:
**02.03.2005 Bulletin 2005/09**

(73) Titulaires:
• **Société de Technologie Michelin
63000 Clermont-Ferrand (FR)**
• **MICHELIN RECHERCHE ET TECHNIQUE S.A.
CH-1763 Granges-Paccot (CH)**

(72) Inventeurs:
• **LAUBRY, Philippe
Greer, SC 29650 (US)**
• **BARBOTIN, Fanny
F-63000 Clermont-Ferrand (FR)**

(74) Mandataire: **Hiebel, Robert
Manufacture Française des Pneumatiques,
Michelin,
Service SGD/LG/PI LADOUX
63040 Clermont-Ferrand Cedex 09 (FR)**

(56) Documents cités:
**EP-A- 0 304 088        EP-A- 0 846 707
WO-A-02/38636**

• **MONAKOV Y B ET AL: "INVESTIGATION OF THE
POLYMERIZATION OF ISOPRENE IN THE
PRESENCE OF CATALYST SYTSTEM
CONTAINING LANTHANIDE SALTS" DOKLADY
PHYSICAL CHEMISTRY, CONSULTANTS
BUREAU, NEW YORK, NY, US, vol. 234, no. 5,
1977, pages 587-589, XP001014427 ISSN:
0012-5016**

**Description**

La présente invention concerne un système catalytique utilisable pour préparer par polymérisation des polybutadiènes, un procédé de préparation dudit système catalytique et un procédé de préparation de polybutadiènes au moyen de ce système catalytique.

Pour la polymérisation du butadiène, il est connu par le document de brevet américain US-A-3 794 604 (voir exemples de réalisation) d'utiliser un système catalytique de type « préformé » en présence d'un monomère diène conjugué, comprenant :

- du butadiène ou de l'isoprène à titre de monomère diène conjugué,
- de l'octanoate de cérium à titre de sel de terre rare en solution dans du benzène,
- de l'hydrure de diisobutyl aluminium à titre d'agent d'alkylation, selon un rapport molaire (agent d'alkylation / sel de terre rare) sensiblement égal à 20, et
- du dichlorure d'éthylaluminium à titre d'halogénure d'alkylaluminium.

Le document de brevet japonais JP-A-60/23406 décrit également un système catalytique de type « préformé » en présence de butadiène, qui est spécifiquement prévu pour la polymérisation du butadiène. Les systèmes catalytiques de ce document comprennent :

- du butadiène à titre de monomère diène conjugué,
- un sel de terre rare d'un acide organique phosphorique trivalent ou pentavalent en solution dans du n-hexane ou du cyclohexane,
- un agent d'alkylation constitué d'un alkylaluminium de formule $Al(R^5)_{3-n}H_n$, où n a pour valeur 0, 1 ou 2 et $R^5$ est un hydrocarbure comportant 1 à 8 atomes de carbone, et
- un acide de Lewis halogéné appartenant indifféremment à la famille des monohalogénures, sesquihalogénures et oligohalogénures éléments des groupes IIIa, Iva ou Va de la classification périodique de Mendeleev ou bien des halogénures organométalliques d'alkylaluminium.

Dans la quasi-totalité des exemples de réalisation de ce document, l'acide de Lewis halogéné qui est effectivement utilisé est un sesquichlorure d' alkylaluminium et, dans ces exemples, les systèmes catalytiques correspondants comprennent ladite terre rare selon une concentration variant sensiblement de 0,0002 mol/l à 0,016 mol/l (voir l'exemple 23 où la concentration estimée de terre rare est comprise entre 0,015 et 0,016 mol/l).

Dans d'autres exemples de réalisation (exemples 10 et 19), l'acide de Lewis halogéné est le chlorure de diéthyl aluminium ou le bromure d'éthylaluminium et les systèmes catalytiques correspondants comprennent alors ladite terre rare selon la concentration extrêmement réduite de 0,0002 mol/l.

Quant aux rapports molaires (agent d'alkylation / sel de terre rare) qui sont effectivement utilisés dans ces exemples de réalisation, ils varient de 10 à 30.

Un inconvénient majeur de tous les systèmes catalytiques testés dans ce document de brevet JP-A-60/23406 réside dans le fait qu'aucun des polybutadiènes obtenus au moyen de ces systèmes catalytiques ne présente à la fois un indice de polydispersité inférieur à 2,1 et une viscosité Mooney ML(1+4) à 100° C au moins égale à 40. Il en résulte que ces polybutadiènes ne sont pas adaptés pour être utilisés dans une bande de roulement d'enveloppe de pneumatique.

Un autre inconvénient des systèmes catalytiques de ce document JP-A-60/23406 réside dans la non-reproductibilité des caractéristiques de microstructure que présentent les polybutadiènes obtenus, en particulier pour les taux d'enchaînements cis-1,4 qui peuvent varier d'une manière significative de 89 % à 99 % dans les exemples de réalisation.

La demanderesse a découvert d'une manière inattendue qu'un système catalytique de type « préformé » à base d'au moins:

- un monomère diène conjugué,
- un sel d'un ou de plusieurs métaux de terre rare (métaux ayant un numéro atomique compris entre 57 et 71 dans le tableau périodique des éléments de Mendeleev) d'un acide phosphorique organique, ledit sel étant en suspension dans au moins un solvant hydrocarboné inerte, saturé et de type aliphatique ou alicyclique, et ce système catalytique comprenant le ou les métaux de terre rare selon une concentration égale ou supérieure à 0,005 mol/l,
- un agent d'alkylation constitué d'un alkylaluminium de formule $AlR_3$ ou $HAlR_2$, le rapport molaire (agent d'alkylation / sel de terre rare) présentant une valeur supérieure à 5, et
- un donneur d'halogène qui appartient à la famille des halogénures d'alkylaluminium à l'exclusion des sesquihalogénures d'alkylaluminium,

permet de remédier aux inconvénients précités en conduisant notamment à l'obtention de polybutadiènes présentant, d'une part, un indice de polydispersité, mesuré par la technique « SEC » de chromatographie d'exclusion par la taille (voir annexe 2 jointe), qui est inférieur à 2,1 et, d'autre part, une viscosité Mooney ML(1+4) à 100° C, mesurée selon la norme ASTM D 1646, pouvant être égale ou supérieure à 40. Ces caractéristiques combinées rendent les polybutadiènes obtenus au moyen de systèmes catalytiques selon l'invention particulièrement bien adaptés pour être utilisés dans des bandes de roulement d'enveloppe de pneumatique.

On notera que les sesquihalogénures d'alkylaluminium, tels que les sesquichlorures d'éthylaluminium, ne sont pas utilisables dans les systèmes catalytiques selon l'invention, du fait qu'ils ne permettent en aucun cas d'obtenir des polybutadiènes présentant un indice de polydispersité inférieur à 2,1, et cela quelle que soit la valeur de concentration en terre(s) rare(s) utilisée dans ces systèmes catalytiques (i.e. même pour des valeurs de ladite concentration qui seraient supérieures à 0,005 mol/l, par exemple proches de 0,016 mol/l à l'instar dudit exemple 23 du document précité JP-A-60123406).

On notera également que cette exclusion des sesquihalogénures d'alkylaluminium pour le donneur d'halogène est une condition nécessaire, mais non suffisante pour l'obtention de polybutadiènes présentant un indice de polydispersité et une viscosité Mooney tels que précités. A cet effet, il faut en outre que la concentration du système catalytique en terre(s) rare(s) soit au moins égale à 0,005 mol/l (i.e. une concentration au moins 25 fois supérieure à ladite concentration de 0,0002 mol/l qui est utilisée dans ledit document JP-A-60/23406).

On notera en outre que les systèmes catalytiques selon l'invention permettent également d'obtenir des polybutadiènes présentant à la fois un indice de polydispersité inférieur à 2,1 et une viscosité Mooney ML(1+4) à 100° C inférieure à 40, par exemple strictement comprise entre 25 et 40.

De préférence, ledit système catalytique selon l'invention comprend ledit ou lesdits métaux de terre rare selon une concentration appartenant à un domaine allant de 0,010 mol/l à 0,060 mol/l.

On notera que les systèmes catalytiques selon l'invention permettent d'obtenir des polybutadiènes présentant des viscosités inhérentes, mesurées à 25° C et à une concentration de 0,1 g/dl dans le toluène (voir annexe 3 pour la méthode de mesure), qui sont supérieures à 2 dl/g.

On notera également que ces systèmes catalytiques permettent d'obtenir des polybutadiènes présentant un taux élevé et reproductible d'enchaînements cis-1,4 supérieur à 96,5 % (mesuré par la technique « NIR » de dosage par proche infrarouge, voir annexe 1 jointe).

Bien entendu, par l'expression « à base de » utilisée pour définir les constituants du système catalytique, on entend le mélange de ces constituants et/ou le produit de la réaction entre ces constituants.

A titre de monomère diène conjugué utilisable pour « préformer » le système catalytique selon l'invention, on peut citer le 1, 3-butadiène, à titre préférentiel.

On peut également citer le 2-méthyl 1, 3-butadiène (ou isoprène), les 2, 3-di (alcoyle en C1 à C5) 1, 3-butadiène tels que par exemple le 2, 3 diméthyl-1, 3-butadiène, le 2, 3-diéthyl-1, 3-butadiène, le 2-méthyl 3-éthyl 1, 3-butadiène, le 2-méthyl 3-isopropyl 1, 3-butadiène, le phényl 1, 3-butadiène, le 1, 3-pentadiène, le 2, 4-hexadiène, ou tout autre diène conjugué ayant entre 4 et 8 atomes de carbone.

On notera que le rapport molaire (monomère / sel de terre rare) peut présenter une valeur allant de 15 à 70.

Selon une autre caractéristique de l'invention, ledit sel de terre rare est constitué d'une poudre non hygroscopique ayant une légère tendance à s'agglomérer à la température ambiante.

Selon un mode préférentiel de réalisation de l'invention, ledit solvant hydrocarboné inerte dans lequel ledit sel de terre rare est en suspension est un solvant aliphatique ou alicyclique de bas poids moléculaire, tel que le cyclohexane, le méthylcyclohexane, le n-heptane, ou un mélange de ces solvants.

A titre encore plus préférentiel, on utilise le méthylcyclohexane à titre de solvant hydrocarboné inerte.

Selon un autre mode de réalisation de l'invention, ledit solvant utilisé pour la suspension du sel de terre rare est un mélange d'un solvant aliphatique de haut poids moléculaire comprenant une huile paraffinique, par exemple de l'huile de vaseline, et d'un solvant de bas poids moléculaire tel que ceux susmentionnés (par exemple le cyclohexane ou le méthylcyclohexane). On réalise alors cette suspension en procédant à un broyage dispersif du sel de terre rare dans cette huile paraffinique, de sorte à obtenir une suspension très fine et homogène du sel.

Selon un exemple préférentiel de réalisation de l'invention, on utilise à titre de sel un tris[bis(2-éthylhexyl) phosphate] dudit ou desdits métaux de terre rare.

A titre encore plus préférentiel, ledit sel de terre rare est le tris[bis(2-éthylhexyl)phosphate] de néodyme.

A titre d'agent d'alkylation utilisable dans le système catalytique selon l'invention, on peut citer des alkylaluminiums tels que:

- des trialkylaluminiums, par exemple le triisobutylaluminium, ou
- des hydrures de dialkylaluminium, par exemple l'hydrure de diisobutylaluminium.

On notera que cet agent d'alkylation est de préférence constitué de l'hydrure de diisobutylaluminium.

De préférence, le rapport molaire (agent d'alkylation / sel de terre rare) est strictement compris entre 5 et 30 et il est par exemple strictement compris entre 5 et 10.

A titre d'halogénure d'alkylaluminium utilisable comme donneur d'halogène dans le système catalytique selon l'invention, on utilise de préférence un monohalogénure d'alkylaluminium et, à titre encore plus préférentiel, le chlorure de diéthylaluminium.

Selon l'invention, on notera que le rapport molaire (donneur d'halogène / sel de terre rare) peut présenter une valeur allant de 2 à 3,5 et, de préférence, allant de 2,6 à 3.

Selon un mode particulièrement avantageux de réalisation de l'invention, on utilise en combinaison l'hydrure de diisobutylaluminium et le chlorure de diéthylaluminium à titre d'agent d'alkylation et de donneur d'halogène, respectivement.

Les systèmes catalytiques selon l'invention sont préparés en mettant en oeuvre les étapes suivantes :

- dans une première étape optionnelle de solvatation, on réalise une suspension dudit sel de terre(s) rare(s) dans ledit solvant hydrocarboné inerte,
- dans une seconde étape, on ajoute à la suspension obtenue à la première étape ledit monomère diène conjugué ou bien, dans le cas où la première étape n'a pas été mise en oeuvre, on ajoute audit sel ledit solvant en plus dudit monomère diène conjugué,
- dans une troisième étape, on ajoute ledit agent d'alkylation à la suspension obtenue au terme de ladite seconde étape pour l'obtention d'un sel alkylé, et
- dans une quatrième étape, on ajoute ledit donneur d'halogène audit sel alkylé.

Le procédé de préparation selon l'invention de polybutadiènes consiste à faire réagir ledit système catalytique dans un solvant de polymérisation hydrocarboné inerte, par exemple du cyclohexane, et en présence de butadiène, pour que le polybutadiène obtenu présente un indice de polydispersité Ip, mesuré par ladite technique « SEC », qui soit inférieur à 2,1.

Ce procédé est de préférence mis en oeuvre à une température allant de 0° C à 100° C.

Les caractéristiques précitées de la présente invention, ainsi que d'autres, seront mieux comprises à la lecture de la description suivante de plusieurs exemples de réalisation de l'invention.

## I. PREPARATION DE SYSTEMES CATALYTIQUES SELON L'INVENTION:

### 1) Synthèse de sels de phosphate organique de néodyme selon l'invention :

On a réalisé une pluralité d'essais pour la synthèse de ces sels. On a utilisé pour chacun de ces essais les méthodes de synthèse qui sont détaillées ci-après.

### 1. 1) Synthèse d'un sel de phosphate de néodyme pour préparer les systèmes catalytiques 1 à 3 selon l'invention (voir paragraphe I. 2) ci-après) :

a) Synthèse d'une solution aqueuse de néodyme $NdCl_3$, $6H_2O$ :

Dans un bécher de 600 ml de forme « haute », on pèse 96 g de $Nd_2O_3$ (commercialisé par la société RHODIA), qui a été dosé par complexométrie à 85,3 % en Nd (85,7 % en théorie), soit présentant 0,57 mol de Nd.

On ajoute 80 ml d'eau déminéralisée. Sous une hotte aspirante, avec une agitation magnétique et à température ambiante, on ajoute lentement 150 ml d'HCl concentré à 36 % en poids (d =1,18), soit 1,75 mol d'HCl (rapport molaire HCl/Nd =1,75/0,57 = 3,07).

La réaction $Nd_2O_3$ + 6 HCl + 9 $H_2O \rightarrow$ 2 $NdCl_3$, $6H_2O$ est très exothermique.

Lorsque tout l'acide chlorhydrique a été ajouté, on porte la solution à ébullition sous agitation magnétique, pour éliminer l'excès d'acide chlorhydrique. La solution aqueuse de $NdCl_3$ est limpide et de couleur mauve. Il ne reste pas de produit insoluble ($Nd_2O_3$).

On procède ensuite à l'évaporation de cette solution jusqu'à obtenir un volume d'environ 130 ml dans le bécher. La solution de $NdCl_3$, $6H_2O$ est alors très concentrée (elle cristallise à température ambiante).

Puis on verse dans un bidon de 10 litres contenant 4500 ml d'eau déminéralisée la solution concentrée de $NdCl_3$ sous agitation et à température ambiante (en utilisant un moteur avec agitateur en forme d'ancre).

Le pH de la solution, mesuré à 25° C, est voisin de 4.

Puis on ajoute à la solution 1500 ml d'acétone technique. Il ne reste pas de produit insoluble, et la solution ainsi obtenue est de couleur rose.

b) <u>Synthèse d'un phosphate organique de sodium de formule [RO]$_2$P(O)ONa (R=2-éthylhexyl):</u>

Dans un bécher de 5 litres contenant 1500 ml d'eau déminéralisée, on dissout 68 g de NaOH en pastilles, soit 1,70 mol. Dans un autre bécher de 3 litres contenant 500 ml d'acétone, on dissout 554 g d'un acide phosphorique organique (l'acide bis(2-éthylhexyl) phosphorique, répertorié dans l'ouvrage « Aldrich » sous la référence 23,782-5), soit 1,72 mol de cet acide. Le rapport molaire NaOH / acide phosphorique organique est de 1,70 /1,72, soit 0,99.

A température ambiante et en agitant à la main à l'aide d'un agitateur en verre, on verse la solution dudit acide phosphorique organique dans la solution de NaOH. La réaction est la suivante :

$$[RO]_2P(O)OH + NaOH \rightarrow [RO]_2P(O)ONa + H_2O.$$

Elle est légèrement exothermique, et l'on obtient une solution homogène de couleur jaunâtre. Le pH de la solution, mesuré à 25° C, est voisin de 7.

c) <u>Synthèse d'un sel phosphaté de néodyme de formule [[RO]$_2$P(O)O]$_3$Nd:</u>

- On verse sous vive agitation (moteur avec agitateur en forme d'ancre) et à température ambiante la solution de phosphate organique de Na obtenue au paragraphe b) ci-dessus dans la solution aqueuse de NdCl$_3$,6H$_2$O obtenue au paragraphe a) ci-dessus.

    Il se forme immédiatement un précipité blanc très fin. On maintient le mélange obtenu sous agitation pendant 30 minutes, après l'addition de tout le phosphate organique de Na (selon un rapport molaire (RO)$_2$P(O)ONa/NdCl$_3$ = 1,70/0,57 = 2,98). La réaction est la suivante :

$$3 [RO]_2P(O)ONa + NdCl_3,6H_2O \rightarrow Nd[OP(O)[OR]_2]_3 + 3 NaCl + 6 H_2O.$$

- On récupère et on lave le sel phosphaté de néodyme ainsi obtenu dans une centrifugeuse équipée d'une "chaussette".

Le pH des eaux «mères» est compris entre 3 et 4 à 25° C. Ces eaux « mères » sont incolores et limpides.

On scinde en deux échantillons le sel obtenu, puis on lave chaque échantillon avec un mélange acétone/ eau déminéralisée en réalisant trois fois le cycle de lavage décrit ci-dessous, afin d'éliminer tous les chlorures.

Chaque cycle de lavage est réalisé dans un seau de 10 litres en matière plastique contenant initialement 2 litres d'acétone. On procède à l'homogénéisation de chaque échantillon et de l'acétone au moyen d'un homogénéiseur « Ultra-Turrax » pendant environ 1 minute, afin d'obtenir une solution de type lait.

On ajoute ensuite 4 litres d'eau déminéralisée dans le seau, puis on homogénéise le mélange obtenu au moyen du même homogénéiseur pendant 3 minutes.

On procède à la centrifugation du mélange ainsi obtenu puis on récupère le sel phosphaté de néodyme dans la "chaussette".

Sur la dernière eau de lavage, le test analytique qualitatif des chlorures est quasi-négatif (la réaction est:

$$NaCl + AgNO_3 \text{ (milieu } HNO_3) \rightarrow AgCl \downarrow + NaNO_3).$$

On sèche le sel de néodyme ainsi lavé dans une étuve à 60° C, sous vide et avec courant d'air pendant environ 80 heures.

Le rendement final pour chacun des essais de synthèse réalisés est compris entre 95 % et 98 %, suivant les pertes dues aux lavages. On obtient à chaque fois environ 600 g de sel phosphaté de néodyme à l'état sec.

Les teneurs massiques en néodyme, déterminées à la fois par la technique de titrage complexométrique en retour par l'acide diéthylène diamine tétracétique (EDTA) et par la technique de spectrométrie d'émission atomique couplée à un plasma induit (ICP/AES), sont sensiblement comprises entre 12,5 % et 12,8 % (pour un taux théorique $\tau$ de 13,01 %, avec $\tau$ = [144,24 / 1108,50] x 100, où 144,24 g/mol = masse molaire du néodyme).

Pour chacune de ces deux techniques, les mesures de teneur en néodyme ont été effectuées après minéralisation acide du sel par voie humide, soit sur bain de sable en système ouvert, soit en micro-ondes en système fermé.

La technique de titrage complexométrique par l'EDTA en retour consiste en un titrage en retour avec complexation du néodyme, par un excès d'EDTA (l'acide diéthylène-diamine tétracétique), dans lequel on dose l'EDTA en excès à pH=4,6 par du sulfate de zinc.

On a utilisé un indicateur coloré avec détection photométrique du point d'équivalence.

La technique de spectrométrie d'émission atomique couplée à un plasma induit est une technique d'analyse élémentaire basée sur l'observation des raies émises par des atomes parvenus dans un état excité au sein d'un plasma.

Les raies d'émission qui ont été utilisées pour l'analyse du néodyme correspondent à des longueurs d'onde de 406,109 nm et 401,225 nm.

Pour mettre en oeuvre cette technique de spectrométrie, on a réalisé un étalonnage préalable avec des sels « témoin » de néodyme présentant une teneur connue en néodyme.

Le tableau ci-après rend compte des teneurs en Nd obtenues au moyen de ces deux techniques (le nombre d'essais réalisés sur chaque échantillon de sel figure entre parenthèses).

| Echantillons de sels analysés | Taux de Nd en % obtenus par titrage complexométrique | Taux de Nd en % obtenus par ICP/AES | Ecart relatif entre les 2 techniques |
|---|---|---|---|
| sel phosphaté de Nd $[[RO]_2P(O)O]_3Nd$ | 12,8 (9) | 12,8 (3) | 0 % |
| sel phosphaté de Nd $[[RO]_2P(O)O]_3Nd$ | 12,8 (4) | 12,6 (3) | 1,6 % |
| sel phosphaté de Nd $[[RO]_2P(O)O]_3Nd$ | 12,7 (6) | 12,2(4) | 4 % |
| sel phosphaté de Nd $[RO]_2P(O)O]_3Nd$ | 12,6 (6) | 12,5 (4) | 0,8 % |
| Acétyl acétonate de Nd « témoin » | 31,7 (6) | 32,4 (4) | 2,2 % |
| Oxalate de Nd « témoin » | 37,7 (3) | 38,0 (3) | 0,8 % |

Les résultats obtenus par les deux techniques sont comparables (écart relatif < 4%).

**1. 2) Synthèse d'un sel de phosphate de néodyme pour préparer les systèmes catalytiques 4 à 6 selon l'invention et les systèmes catalytiques «témoin» 1 et 2 (voir paragraphe I. 2) ci-après) :**

a) Synthèse d'une solution aqueuse de néodyme $NdCl_3, 6H_2O$ :

Dans un réacteur, on pèse 0,864 kg de $Nd_2O_3$ soit 5,10 moles de Nd.

On ajoute 27 kg d'eau déminéralisée. On ajoute lentement, à température ambiante, 1,35 1 d'HCl concentré à 36 % en poids (d = 1,18).

La réaction $Nd_2O_3 + 6\ HCl + 9\ H_2O \rightarrow 2\ NdCl_3, 6H_2O$ est très exothermique.

Lorsque tout l'acide chlorhydrique a été ajouté, on porte la solution à ébullition sous agitation pendant 30 minutes, pour éliminer l'excès d'acide chlorhydrique. La solution aqueuse de $NdCl_3$ est limpide et de couleur mauve. Il ne reste pas de produit insoluble ($Nd_2O_3$).

Le pH de la solution, mesuré à 25° C, est corrigé par ajout de 0,55 1 de soude à 2 mole par litre. Le pH final est égal à 4,47.

b) Synthèse d'un phosphate organique de sodium de formule $[RO]_2P(O)ONa$ (R=2-éthylhexyl):

Dans un réacteur contenant 24 kg d'eau déminéralisée, on dissout 0,612 kg de NaOH en pastilles, soit 15,3 mol. Dans un autre réacteur contenant 9 1 d'acétone, on dissout 5,028 kg d'un acide phosphorique organique (l'acide bis(2-éthylhexyl) phosphorique, répertorié dans l'ouvrage « Aldrich » sous la référence 23,782-5), soit 15,61 mol de cet acide.

A température ambiante, on verse la solution dudit acide phosphorique organique dans la solution de NaOH. La réaction est la suivante :

$$[RO]_2P(O)OH + NaOH \rightarrow [RO]_2P(O)ONa + H_2O.$$

Elle est légèrement exothermique, et l'on obtient une solution homogène de couleur jaunâtre. Le pH de la solution, mesuré à 25° C, est égal à 5,4.

c) Synthèse d'un sel phosphaté de néodyme de formule [[RO]$_2$P(O)O]$_3$Nd:

On verse sous vive agitation et à température de 36° C la solution aqueuse de NdCl$_3$,6H$_2$O obtenue au paragraphe a) ci-dessus sur la solution de phosphate organique de Na obtenue au paragraphe b) ci-dessus.
Il se forme immédiatement un précipité blanc très fm. On maintient le mélange obtenu sous agitation pendant 15 minutes, après l'addition de tout le phosphate organique de Na:

$$3 \ [RO]_2P(O)ONa + NdCl_3,6H_2O \rightarrow Nd[OP(O)[OR]_2]_3 + 3 \ NaCl + 6 \ H_2O.$$

- On récupère par sédimentation le sel phosphaté de néodyme ainsi obtenu et on le lave avec un mélange de 45 litres d'eau déminéralisée et 15 litres d'acétone pendant 15 minutes. Le sel phosphaté de néodyme est ensuite récupéré par centrifugation.

Le pH des eaux « mères » est compris entre 3 et 4 à 25° C. Ces eaux « mères » sont incolores et limpides.
Sur la dernière eau de lavage, le test analytique qualitatif des chlorures est quasi-négatif (la réaction est: NaCl + AgNO$_3$ (milieu HNO$_3$) $\rightarrow$ AgCl $\downarrow$ + NaNO$_3$).
On sèche le sel de néodyme ainsi lavé dans une étuve à 60° C, sous vide et avec courant d'air pendant 72 heures.

**1. 3) Synthèse d'un sel de phosphate de néodyme pour préparer le système catalytique 7 selon l'invention (voir paragraphe I. 2) ci-après) :**

a) Synthèse d'une solution aqueuse de néodyme NdCl$_3$, 6H$_2$O :

Dans un réacteur, on pèse 0,288 kg de Nd$_2$O$_3$ soit 1,7 moles de Nd.
On ajoute 9 kg d'eau déminéralisée. On ajoute lentement, à température ambiante, 0,45 litre d'HCl concentré à 36 % en poids (d =1,18).
La réaction Nd$_2$O$_3$ + 6 HCl + 9 H$_2$O $\rightarrow$ 2 NdCl$_3$, 6H$_2$O est très exothermique.
Lorsque tout l'acide chlorhydrique a été ajouté, on porte la solution à ébullition sous agitation pendant 30 minutes, pour éliminer l'excès d'acide chlorhydrique. La solution aqueuse de NdCl$_3$ est limpide et de couleur mauve. Il ne reste pas de produit insoluble (Nd$_2$O$_3$).
Le pH de la solution, mesuré à 25° C, est corrigé par ajout de 0,2 1 de soude à 2 mole par litre. Le PH final est égal à 3,5.

b) Synthèse d'un phosphate organique de sodium de formule [RO]$_2$P(O)ONa (R=2-éthylhexyl):

Dans un réacteur contenant 8 kg d'eau déminéralisée, on dissout 0,204 kg de NaOH en pastilles, soit 5,1 mol. Dans un autre réacteur contenant 31 d'acétone, on dissout 1,659 kg d'un acide phosphorique organique (l'acide bis(2-éthylhexyl) phosphorique, répertorié dans l'ouvrage « Aldrich » sous la référence 23,782-5), soit 5,15 mol de cet acide.
A température ambiante, on verse la solution dudit acide phosphorique organique dans la solution de NaOH. La réaction est la suivante :

$$[RO]_2P(O)OH + NaOH \rightarrow [RO]_2P(O)ONa + H_2O.$$

Elle est légèrement exothermique, et l'on obtient une solution homogène de couleur jaunâtre. Le pH de la solution, mesuré à 25° C, est égal à 5.

c) Synthèse d'un sel phosphaté de néodyme de formule [[RO]$_2$P(O)O]$_3$Nd:

On verse sous vive agitation et à une température comprise en 35 et 40° C la solution de phosphate organique de Na obtenue au paragraphe b) ci-dessus sur la solution aqueuse de NdCl$_3$,6H$_2$O obtenue au paragraphe a) ci-dessus.
Il se forme immédiatement un précipité blanc très fin. On maintient le mélange obtenu sous agitation pendant 15 minutes, après l'addition de tout le phosphate organique de Na:

$$3 [RO]_2P(O)ONa + NdCl_3,6H_2O \rightarrow Nd[OP(O)[OR]_2]_3 + 3 NaCl + 6 H_2O.$$

- On récupère par sédimentation le sel phosphaté de néodyme ainsi obtenu et on le lave avec un mélange de 15 litres d'eau déminéralisée et 5 litres d'acétone pendant 5 minutes. Le sel phosphaté de néodyme est ensuite récupéré par centrifugation.

Le pH des eaux « mères » est compris entre 3 et 4 à 25° C. Ces eaux « mères » sont incolores et limpides.

Sur la dernière eau de lavage, le test analytique qualitatif des chlorures est quasi-négatif (la réaction est: $NaCl + AgNO_3$ (milieu $HNO_3$) $\rightarrow AgCl \downarrow + NaNO_3$).

On sèche le sel de néodyme ainsi lavé dans une étuve à 60° C, sous vide et avec courant d'air pendant 72 heures.

**2) Synthèse de systèmes catalytiques «témoin» et selon l'invention à partir de ces sels:**

En vue de l'obtention de chaque système catalytique, on verse le sel correspondant de néodyme à l'état de poudre dans un réacteur préalablement nettoyé de ses impuretés. On soumet ensuite ce sel à un barbotage à l'azote pendant 15 min.

- Première étape (optionnelle) de solvatation :

On introduit un solvant constitué de cyclohexane ou de méthylcyclohexane dans le réacteur contenant le sel de néodyme en vue de la formation d'un gel, la durée et la température de mise en contact de ce solvant et du sel de néodyme étant, soit de 3 heures à une température comprise entre 20 et 25° C, soit de 30 min. à 30° C.

- Seconde étape de « préformation » de chaque système catalytique :

On introduit ensuite du butadiène dans le réacteur à une température de 30° C ainsi qu'une quantité supplémentaire dudit solvant (cet ajout supplémentaire de solvant n'est pas nécessaire en cas de solvatation antérieure). On notera que l'on doit ajouter pratiquement tout le solvant lors de cette seconde étape, si ladite première étape n'a pas été mise en oeuvre.

- Troisième étape d'alkylation :

On introduit ensuite dans le réacteur de l'hydrure de diisobutylaluminium (HDiBA) ou du triisobutylaluminium (TiBA)à titre d'agent d'alkylation du sel de néodyme, selon une concentration d'environ 1 M. La durée de l'alkylation est de 15 min. La température de la réaction d'alkylation est, soit comprise entre 20 et 25° C, soit égale à 30° C.

- Quatrième étape d'halogénation :

On introduit ensuite dans le réacteur du chlorure de diéthylaluminium (CDEA) ou du sesquichlorure d'éthylaluminium à titre de donneur d'halogène, selon une concentration d'environ 1 M. La température du milieu réactionnel est portée à 60° C.

- Cinquième étape de vieillissement :

On procède ensuite à un vieillissement du mélange ainsi obtenu en maintenant cette température de 60° C pendant une durée de 120 min.

On stocke finalement la solution catalytique sous atmosphère d'azote dans un congélateur, à la température de -15° C.

Les systèmes catalytiques « témoin » et selon l'invention obtenus présentent les rapports molaires suivants (butadiène, agent d'alkylation et donneur d'halogène « DH ») par rapport au sel de néodyme :

Nd/ butadiène/ HDiBA ou TiBA/ DH = 1 / 47 ou 50 / 6, 10, 15 ou 20 / 2,2, 2,3 ou 3.

Le tableau 1 ci-après présente les caractéristiques de ces systèmes catalytiques, avec :

- conc. : concentration

- CH : cyclohexane et MCH : méthylcyclohexane
- butadiène/Nd : rapport molaire (monomère diène conjugué / sel de néodyme)
- Al/ Nd : rapport molaire (agent d'alkylation / sel de néodyme)
- DH/ Nd : rapport molaire (donneur d'halogène / sel de néodyme)
- SESQUICHL. : sesquichlorure d'éthylaluminium
- HDiBA : hydrure de diisobutylaluminium, et TiBA : triisobutylaluminium.

On notera que les solutions d'alkylaluminium et d'halogénure d'alkylaluminium utilisées sont concentrées selon environ 1 M dans le solvant (CH ou MCH).

Tableau 1 :

| Systèmes catalytiques | Conc. finale en Nd (mol/l) | Solvatation -Durée -température - solvant | Préformation butadiène/Nd | Alkylation - Agent, - Conc. agent (mol/l), - Al/ Nd | Alkylation - Durée -température | Halogénation - DH utilisé, - Conc. DH (mol/l), - DH/ Nd | Vieillissement - Durée température |
|---|---|---|---|---|---|---|---|
| **« témoin » 1** | 0,0002 | 30 min. 30° C MCH | 50 | HDiBA 0,875 10 | 15 min. 30° C | CDEA 1,018 3 | 120 min. 60° C |
| **« témoin » 2** | 0,0201 | 30 min. 30° C MCH | 50 | HDiBA 0,885 10 | 15 min. 30° C | SESQUICHL 0,968 1,85 | 120 min. 60° C |
| **Invention 1** | 0,0201 | 180 min. 20 à 25° C CH | 47 | HDiBA 1,17 10 | 15 min. 20 à 25° C | CDEA 2,45 2,2 | 120 min. 60° C |
| **Invention 2** | 0,0201 | 180 min. 20 à 25° C CH | 47 | HDiBA 1,17 15 | 15 min. 20 à 25° C | CDEA 2,45 2,2 | 120 min. 60° C |
| **Invention 3** | 0,0201 | 180 min. 20 à 25° C CH | 47 | HDiBA 1,17 20 | 15 min.. 20 à 25° C | CDEA 2,45 2,2 | 120 min. 60° C |
| **Invention 4** | 0,0201 | 30 min. 30° C MCH | 50 | HDiBA 0,885 10 | 15 min. 30° C | CDEA 0,968 3 | 120 min. 60° C |
| **Invention 5** | 0,0201 | Pas de solvatation | 50 | HDiBA 0,885 10 | 15 min. 30° C | CDEA 0,968 3 | 120 min. 60° C |
| **Invention 6** | 0,0201 | 30 min. 30° C MCH | 50 | TiBA 0,778 10 | 15 min. 30° C | CDEA 0,968 3 | 120 min. 60° C |
| Invention 7 | 0,0200 | 30 min. 30° C MCH | 50 | HDiBA 0,947 6 | 15 min. 30° C | CDEA 3 | 120 min. 60° C |

## II. <u>Polymérisation du butadiène au moyen de ces systèmes catalytiques :</u>

### 1) <u>Mode opératoire suivi pour les diverses polymérisations:</u>

On utilise, à titre de réacteur de polymérisation, une bouteille "Steinie" préalablement lavée et séchée. Chaque réaction de polymérisation du butadiène est effectuée à 50° C ou 60 ° C et sous atmosphère inerte (azote).

Pour chaque polymérisation, on introduit du cyclohexane dans ladite bouteille à titre de solvant de polymérisation, excepté lorsque le système catalytique utilisé comprend le néodyme selon la concentration très réduite de l'ordre de 0,0002 mol/l (dans ce dernier cas, la polymérisation est réalisée uniquement par ajout au système catalytique du butadiène à polymériser). On fait barboter à l'azote ce cyclohexane éventuellement introduit pendant 10 min., pour éliminer les impuretés.

On utilise un rapport massique « solvant de polymérisation (cyclohexane) / monomère (butadiène) » variant de 7 à 95 (ce rapport massique est appelé S/M ci-après).

La quantité de base catalytique en néodyme varie de 60 $\mu$mol à 2453 $\mu$mol pour 100 g de butadiène, suivant l'essai réalisé (quantité exprimée en $\mu$Mcm dans le tableau 2 ci-après).

Le méthanol (1 ml) ou l'acétylacétone (utilisée en excès) sont utilisés pour stopper les réactions de polymérisation.

La N-1,3-diméthylbutyl-N'-phényl-p-phénylènediamine (6PPD) est utilisée comme agent de protection (selon une masse de 0,2 g pour 100 g d'élastomère) des solutions polymériques obtenues au moyen des systèmes catalytiques « témoin » et 4 à 7 selon l'invention, alors qu'un agent de protection de dénomination « AO2246 » est utilisé (selon un volume d'1 ml d'une solution de toluène à 100 g/l) pour les solutions polymériques obtenues au moyen des autres systèmes catalytiques 1 à 3 selon l'invention.

On extrait ensuite les polybutadiènes des solutions polymériques ainsi obtenues, soit par stripping à la vapeur d'eau en présence de tamolate de calcium et soit un séchage sur rouleaux à 100°C soit un séchage en étuve à 60°C sous vide avec un léger courant d'azote, soit par dévolatilisation en faisant le vide sous azote à 50° C.

### 2) <u>Détails des polymérisations effectuées au moyen de ces systèmes catalytiques:</u>

Le tableau 2 ci-après présente les caractéristiques de chaque réaction de polymérisation réalisée, notamment en termes de :

- quantité de base catalytique en néodyme utilisée (Nd en $\mu$Mcm, c'est-à-dire en micromoles pour 100 g de monomère butadiène à polymériser),
- taux de conversion (en %) du butadiène en polybutadiène en fonction de temps de réaction déterminés en min. (utilisé pour décrire la cinétique de polymérisation),
- rapport massique S/M (solvant cyclohexane / monomère butadiène à polymériser) et température T de polymérisation.

Ce tableau 2 présente également les caractéristiques des polybutadiènes obtenus, notamment en termes de :

- viscosité inhérente $\eta_{inh}$ à 0,1 g/dl dans le toluène, mesurée à 25° C selon la méthode décrite à l'annexe 3 jointe, et viscosité Mooney ML (1+4) à 100° C, mesurée selon la norme ASTM D 1646,
- indice de polydispersité Ip, mesuré par chromatographie d'exclusion par la taille (SEC), voir annexe 2, paragraphe c1) pour l'analyse des polybutadiènes obtenus aux essais T1, T1', T1", T2, T2', T2", I4, I5, I6 et annexe 2, paragraphe c2) pour l'analyse des polybutadiènes obtenus aux autres essais I1, 12, 13 et 17,
- taux d'enchaînements cis-1,4, d'enchaînements trans et d'enchaînements 1,2, mesurés par la technique de dosage par proche infrarouge (NIR), voir annexe 1.

Tableau 2 :

| Essais | Système Catalytique | Quantité Nd (μmolcm) | Rapport S/ M et T (°C) | Temps réaction (min.) | Taux conversion (%) | $\eta_{inh}$ (dl/g) | Mooney ML(1+4) 100° C | Ip | Unités cis-1,4 (%) | Unités trans (%) | Unités 1,2 (%) |
|---|---|---|---|---|---|---|---|---|---|---|---|
| T1 | «témoin» 1 | 2453 | 94 50° C | 70 | 99 | 2,27 | non mesurée | 27,44 | 94,5 | 4,2 | 1,3 |
| T1' | «témoin» 1 | 2044 | 79 50° C | 120 | 100 | 2,64 | non mesurée | 21,70 | 95,3 | 3,7 | 1,0 |
| T1" | «témoin» 1 | 1531 | 59 50° C | 180 | 100 | 3,41 | 21 | > 25 | 96,0 | 2,9 | 1,1 |
| T2 | «témoin» 2 | 247 | 9.8 50° C | 390 | 86 | 2,15 | non mesurée | 2,72 | 99,1 | 0,8 | 0,1 |
| T2' | «témoin» 2 | 309 | 9.8 50° C | 390 | 97 | 1,96 | non mesurée | 2,76 | | | |
| T2" | «témoin» 2 | 618 | 9.8 50° C | 170 | 100 | 1,22 | non mesurée | 2,71 | | | |
| II. | Invention 1 | 130 | 7 60° C | 20 | 80 | 2,37 | | 1,77 | 98 | 1 | 1 |
| I2 | Invention 2 | 80 | 7 60° C | 35 | 83 | 2,53 | | 1,56 | 98 | 1 | 1 |
| I3 | Invention 3 | 60 | 7 60° C | 40 | 81 | 2,62 , | | 1,75 | 98 | 1 | 1 |
| I4 | Invention 4 | 155 | 9.8 50° C | 120 | 100 | 2,67 | non mesurée | 1,95 | | | |
| I4' | Invention 4 | 155 | 10.4 50° C | 150 | 100 | 2,53 | 47 | 1,88 | 97,6 | 2,4 | 0 |
| I4" | Invention 4 | 184 | 10.4 50° C | 150 | 100 | 2,37 | 41 | 1,91 | 97,1 | 2,9 | 0 |
| 15 | Invention 5 | 155 | 9.3 50° C | 90 | 100 | 2,43 | non mesurée | 1,84 | 96,8 | 3,2 | 0 |
| 16 | Invention 6 | 618 | 9.3 50° C | 5 | 100 | 2,85 | non mesurée | 2,05 | 96,9 | 3,1 | 0 |
| 17 | Invention 7 | 280 | 7.2 50° C | 16 | 97 | 2,50 | non mesurée | 1,56 | 97,3 | 2,4 | 0,3 |

Les résultats de ces essais montrent globalement que les systèmes catalytiques 1 à 7 selon l'invention, qui sont caractérisés, d'une part, en ce qu'ils comprennent à titre de donneur d'halogène un halogénure d'alkylaluminium n'étant pas un sesquihalogénure et, d'autre part, la terre rare selon une concentration supérieure à 0,005 mol/l (d'environ 0,02 mol/l), permettent d'obtenir des polybutadiènes présentant un indice de polydispersité inférieur à 2,1 et en même temps une viscosité Mooney supérieure à 40, ce qui les rend particulièrement bien adaptés pour les bandes de roulement d'enveloppe de pneumatique.

Plus précisément, les essais « témoin » T1, T1', T1" montrent que le système catalytique « témoin » 1, qui est caractérisé en ce qu'il comprend un monohalogénure d'alkylaluminium à titre de donneur d'halogène et du néodyme selon une concentration inférieure à 0,005 mol/l (environ 0,0002 mol/l), conduit à l'obtention de polybutadiènes présentant un indice de polydispersité Ip supérieur à 20, valeur inacceptable dans le cadre de la présente invention, et cela même en faisant varier dans une large mesure les conditions de polymérisation (quantité de néodyme pour 100 g de butadiène, notamment). En outre, la viscosité Mooney obtenue (voir la valeur de 21 à l'essai T1") est très inférieure à la valeur minimale de 40 qui est recherchée.

Les essais « témoin » T2, T2', T2" montrent que le système catalytique « témoin » 2, qui comprend un sesquihalogénure d'alkylaluminium à titre de donneur d'halogène et du néodyme selon une concentration conforme à l'invention supérieure à 0,005 mol/l (environ 0,020 mol/l), conduit néanmoins à l'obtention de polybutadiènes présentant un indice de polydispersité Ip supérieur à 2,70, valeur trop élevée dans le cadre de la présente invention, et cela même en faisant varier dans une large mesure les conditions de polymérisation (quantité de néodyme pour 100 g de butadiène, notamment).

Les essais I1, I2 et I3 selon l'invention montrent que les systèmes catalytiques 1, 2 et 3 de l'invention, qui comprennent, avec une solvatation dans du méthylcyclohexane, un monohalogénure d'alkylaluminium (le CDEA) à titre de donneur d'halogène et du néodyme selon une concentration d'environ 0,020 mol/l avec un rapport molaire (agent d'alkylation HDiBA/Nd) égal à 10, 15 ou 20 respectivement, conduit à l'obtention de polybutadiènes présentant chacun un indice de polydispersité Ip de valeur très inférieure à 2,1.

Les essais I4, I4' et I4" selon l'invention montrent que le système catalytique 4 de l'invention, qui comprend, avec une solvatation dans du cyclohexane, ledit CDEA à titre de donneur d'halogène et du néodyme selon une concentration d'environ 0,020 mol/l avec un rapport molaire (agent d'alkylation HDiBA/Nd) égal à 10, conduit à l'obtention de polybutadiènes présentant un indice de polydispersité Ip inférieur à 2,1 et en même temps une viscosité Mooney supérieure à 40 (voir valeurs de 41 et 47 aux essais I4' et I4"), et cela même en faisant varier dans une large mesure les conditions de polymérisation (quantité de néodyme pour 100 g de butadiène, notamment).

L'essai I5 selon l'invention montre que le système catalytique 5 de l'invention, qui comprend, sans qu'aucune solvatation n'ait été réalisée, ledit CDEA à titre de donneur d'halogène et du néodyme selon une concentration d'environ 0,020 mol/l avec un rapport molaire (agent d'alkylation HDiBA/Nd) égal à 10, conduit à l'obtention d'un polybutadiène présentant un indice de polydispersité Ip inférieur à 2,1.

L'essai I6 selon l'invention montre que le système catalytique 6 de l'invention, qui comprend, avec une solvatation dans le méthylcyclohexane, ledit CDEA à titre de donneur d'halogène, du triisobutylaluminium (TiBA) à titre d'agent d'alkylation à la place du HDiBA et du néodyme selon une concentration d'environ 0,020 mol/l avec un rapport molaire (agent d'alkylation TiBA/Nd) égal à 10, conduit également à l'obtention d'un polybutadiène présentant un indice de polydispersité Ip inférieur à 2,1.

L'essai I7 selon l'invention montre que le système catalytique 7 de l'invention, qui comprend, avec une solvatation dans le méthylcyclohexane, ledit CDEA à titre de donneur d'halogène, de l'HDiBA à titre d'agent d'alkylation et du néodyme selon une concentration d'environ 0,020 mol/l avec un rapport molaire (agent d'alkylation HDiBA/Nd) compris entre 5 et 10 (égal à 6), conduit également à l'obtention d'un polybutadiène présentant un indice de polydispersité Ip très inférieur à 2,1.

On notera que les viscosités Mooney ML(1+4) à 100° C des polybutadiènes obtenus au moyen des systèmes catalytiques 1, 2, 3, 5, 6 et 7 selon l'invention peuvent être estimées à des valeurs supérieures à 40 bien que n'ayant pas été effectivement mesurées, tout comme pour les essais I4' et I4" relatifs audit système catalytique 4, cette estimation étant réalisée en tenant compte des valeurs correspondantes de viscosité inhérente (en dl/g) et d'indice de polydispersité.

On notera également que les polybutadiènes obtenus au moyen des systèmes catalytiques II à I7 selon l'invention présentent des taux élevés et reproductibles d'enchaînements cis-1,4 au moins égaux à 96,8 %, mesurés par la technique « NIR » de dosage par proche infrarouge.

> **ANNEXE 1 : Détermination de la microstructure des polybutadiènes obtenus.**

On a utilisé la technique de dosage appelée « proche infrarouge » (NIR). Il s'agit d'une méthode indirecte faisant appel à des élastomères « témoin » dont la microstructure a été mesurée par la technique de RMN[13]C. On utilise la relation quantitative (loi de Beer-Lambert) existant entre la répartition des monomères dans un élastomère et la forme du spectre NIR de celui-ci. Cette technique est mise en oeuvre en deux étapes :

1) Etalonnage :

- On procède à l'acquisition des spectres respectifs des élastomères « témoin ».
- On établit un modèle mathématique associant une microstructure à un spectre. donné, ceci à l'aide de la méthode de régression PLS (Partial Least Squares) reposant sur une analyse factorielle des données spectrales. Les deux documents suivants traitent d'une manière approfondie de la théorie et de la mise en oeuvre de cette méthode d'analyse de données « multi-variées » :

    (1) P. GELADI et B. R. KOWALSKI
    « Partial Least Squares regression : a tutorial »,
    Analytica Chimica Acta, vol. 185, 1-17 (1986).
    (2) M. TENENHAUS
    « La régression PLS - Théorie et pratique »
    Paris, Editions Technip (1998).

2) Mesure :

- On procède à un enregistrement du spectre de l'échantillon.
- On réalise le calcul de la microstructure.

---

## ANNEXE 2 :

## Détermination de la distribution des masses moléculaires des polybutadiènes obtenus par la technique de chromatographie d'exclusion par la taille (SEC). 

---

a) Principe de la mesure:

La chromatographie d'exclusion par la taille ou SEC (size exclusion chromatography) permet de séparer physiquement les macromolécules suivant leur taille à l'état gonflé sur des colonnes remplies de phase stationnaire poreuse. Les macromolécules sont séparées par leur volume hydrodynamique, les plus volumineuses étant éluées en premier.

Sans être une méthode absolue, la SEC permet d'appréhender la distribution des masses moléculaires d'un polymère. A partir de produits étalons commerciaux, les différentes masses moyennes en nombre (Mn) et en poids (Mw) peuvent être déterminées et l'indice de polydispersité calculé (Ip = Mw/Mn).

b) Préparation du polymère:

Il n'y a pas de traitement particulier de l'échantillon de polymère avant analyse. Celui-ci est simplement solubilisé dans du tétrahydrofurane à une concentration d'environ 1 g/l.

c) Analyse SEC:

Cas c1) L'appareillage utilisé est un chromatographe « WATERS alliance ». Le solvant d'élution est le tétrahydrofurane, le débit de 1 ml/min., la température du système de 35° C et la durée d'analyse de 90 min. On utilise un jeu de deux colonnes de dénomination commerciale « STYRAGEL HT6E ».

Le volume injecté de la solution de l'échantillon de polymère est 100 µl. Le détecteur est un réfractomètre différentiel « WATERS 2140 » et le logiciel d'exploitation des données chromatographiques est le système « WATERS MILLENIUM ».

Cas c2) L'appareillage utilisé est un chromatographe « WATERS, modèle 150C ». Le solvant d'élution est le tétrahydrofurane, le débit de 0,7 ml/mn, la température du système de 35°C et la durée d'analyse de 90 min. On utilise un jeu de quatre colonnes en série, de dénominations commerciales « SHODEX KS807 », « WATERS type STYRAGEL HMW7 » et deux « WATERS STYRAGEL HMW6E ».

Le volume injecté de la solution de l'échantillon de polymère est 100 µl. Le détecteur est un réfractomètre différentiel « WATERS modèle RI32X » et le logiciel d'exploitation des données chromatographiques est le système « WATERS MILLENIUM » (version 3.00).

---

## ANNEXE 3 :

### Détermination de la viscosité inhérente à 25° C d'une solution de polymère à 0,1 g/dl dans le toluène, à partir d'une solution de polymère sec.

---

PRINCIPE :

La viscosité inhérente est déterminée par la mesure du temps d'écoulement t de la solution de polymère et du temps d'écoulement $t_o$ du toluène, dans un tube capillaire.

La méthode se décompose en 3 grandes étapes:

→ _étape n°1_ : préparation de la solution de mesure à 0,1 g/dl dans le toluène ;
→ _étape n°2_ : mesure des temps d'écoulement t de la solution de polymère et $t_o$ du toluène à 25° C dans un tube « Ubbelohde » ;
→ _étape n°3_ : calcul de la viscosité inhérente.

_ETAPE N°1_ - Préparation de la solution de mesure à partir du polymère sec :

Dans une bouteille de 250 ml lavée et étuvée à 140° C au minimum 10 heures, on introduit 0,1 g de polymère sec (utilisation d'une balance de précision d'échelon e = 0,1 mg) et 100 ml de toluène de pureté supérieure à 99,5 %.

On place la bouteille sur une dispositif d'agitation à secousses pendant 90 min. (voire plus si le polymère n'est pas solubilisé).

_ETAPE N°2_ - Mesure des temps d'écoulement $t_o$ du toluène et t de la solution de polymère à 25° C :

1. Matériel :

- 1 cuve avec un bain thermostaté à 25° C ± 0,1° C pourvu d'un système de refroidissement à l'eau courante. La cuve est remplie par ¼ d'eau courante et ¾ d'eau déminéralisée.
- 1 thermomètre à alcool de type « PROLABO », placé dans le bain thermostaté avec une incertitude de ± 0,1° C
- 1 tube viscosimétrique « Ubbelohde » destiné à être placé en position verticale dans le bain thermostaté.

_Caractéristiques des tubes utilisés:_

- diamètre du capillaire: 0,46 mm ;
- capacité: 18 à 22 ml.

2. <u>Mesure du temps d'écoulement t$_o$ du toluène :</u>

- rincer le tube par lavages au toluène ;
- introduire la quantité de toluène (pureté supérieure à 99,5 %) nécessaire à la mesure ;
- vérifier que le bain thermostaté est à 25° C ;
- déterminer le temps d'écoulement t$_0$.

3. <u>Mesure du temps d'écoulement de la solution de polymère t</u>

- rincer le tube par lavages à la solution de polymère ;
- introduire la quantité de solution de polymère nécessaire à la mesure ;
- vérifier que le bain thermostaté est à 25° C.
- déterminer le temps d'écoulement t.

*ETAPE N°3* - <u>Calcul de la viscosité inhérente :</u>

La viscosité inhérente est obtenue par la relation suivante :

$$\eta_{inh} = \frac{1}{C} \ln\left[\frac{(t)}{(t_o)}\right]$$

avec

**C** : concentration de la solution toluénique de polymère en g/dl ;
**t** : temps d'écoulement de la solution toluénique de polymère en secondes ;
**t$_o$** : temps d'écoulement du toluène en secondes ; $\eta_{inh}$ : viscosité inhérente exprimée en dl/g.

**Revendications**

**1.** Système catalytique utilisable pour préparer par polymérisation des polybutadiènes, à base d'au moins:

- un monomère diène conjugué,
- un sel d'un ou plusieurs métaux de terre rare d'un acide phosphorique organique, ledit sel étant en suspension dans au moins un solvant hydrocarboné inerte et saturé de type aliphatique ou alicyclique,
- un agent d'alkylation constitué d'un alkylaluminium de formule AlR$_3$ ou HAlR$_2$, le rapport molaire (agent d'alkylation / sel de terre(s) rare(s)) étant supérieur à 5, et
- un donneur d'halogène qui appartient à la famille des halogénures d'alkylaluminium à l'exclusion des sesquihalogénures d'alkylaluminium,

**caractérisé en ce que** ledit système catalytique comprend ledit métal ou lesdits métaux de terre rare selon une concentration égale ou supérieure à 0,005 mol/l.

**2.** Système catalytique selon la revendication 1, **caractérisé en ce qu'**il comprend ledit métal ou lesdits métaux de terre rare selon une concentration appartenant à un domaine allant de 0,010 mol/l à 0,060 mol/l.

**3.** Système catalytique selon une des revendications précédentes, **caractérisé en ce que** ledit sel est un tris[bis (2-éthylhexyl)phosphate] de terre(s) rare(s).

**4.** Système catalytique selon une des revendications précédentes, **caractérisé en ce que** ledit sel est le tris[bis (2-éthylhexyl)phosphate] de néodyme.

5. Système catalytique selon une des revendications précédentes, **caractérisé en ce que** ledit rapport molaire (agent d'alkylation / sel de terre(s) rare(s)) est strictement compris entre 5 et 10.

6. Système catalytique selon une des revendications précédentes, **caractérisé en ce que** le rapport molaire (donneur d'halogène/ sel) présente une valeur allant de 2 à 3,5.

7. Système catalytique selon une des revendications précédentes, **caractérisé en ce que** le rapport molaire (monomère diène conjugué / sel) présente une valeur allant de 15 à 70.

8. Système catalytique selon une des revendications précédentes, **caractérisé en ce que** ledit monomère diène conjugué est le butadiène.

9. Système catalytique selon une des revendications précédentes, **caractérisé en ce que** ledit donneur d'halogène est un monohalogénure d'alkylaluminium.

10. Système catalytique selon la revendication 9, **caractérisé en ce que** ledit donneur d'halogène est le chlorure de diéthylaluminium.

11. Système catalytique selon la revendication 10, **caractérisé en ce que** ledit agent d'alkylation est l'hydrure de diisobutylaluminium.

12. Procédé de préparation d'un système catalytique selon une des revendications précédentes, **caractérisé en ce qu'**il comprend les étapes suivantes :

   - dans une première étape optionnelle, on réalise une suspension dudit sel de terre(s) rare(s) dans ledit solvant,
   - dans une seconde étape, on ajoute à la suspension obtenue à la première étape ledit monomère diène conjugué ou bien, dans le cas où la première étape n'a pas été mise en oeuvre, on ajoute audit sel ledit solvant en plus dudit monomère diène conjugué,
   - dans une troisième étape, on ajoute ledit agent d'alkylation à la suspension obtenue au terme de ladite seconde étape pour l'obtention d'un sel alkylé, et
   - dans une quatrième étape, on ajoute ledit donneur d'halogène audit sel alkylé.

13. Procédé de préparation d'un polybutadiène, **caractérisé en ce qu'**il consiste à faire réagir un système catalytique selon une des revendications 1 à 11 dans un solvant hydrocarboné inerte en présence de butadiène, pour que le polybutadiène obtenu présente un indice de polydispersité Ip, mesuré par la technique de chromatographie d'exclusion par la taille, qui soit inférieur à 2,1.

14. Procédé de préparation d'un polybutadiène selon la revendication 13, **caractérisé en ce que** ledit polybutadiène présente en outre une viscosité Mooney ML(1+4) à 100° C, mesurée selon la norme ASTM D 1646, qui est égale ou supérieure à 40.

**Patentansprüche**

1. Katalytisches System, das verwendbar ist, um Polybutadiene durch Polymerisation herzustellen, auf der Basis von zumindest:

   - einem konjugierten Dienmonomer,
   - einem Salz eines oder mehrerer Seltenerdmetalle einer organischen Phosphorsäure, wobei das Salz in mindestens einem inerten und gesättigten Lösungsmittel auf Kohlenwasserstoffbasis vom aliphatischen oder alicyclischen Typ gelöst ist,
   - einem Alkylierungsmittel, das aus einem Alkylaluminium der Formel $AlR_3$ oder $HAlR_2$ besteht, wobei das Molverhältnis (Alkylierungsmittel/Salz von Seltenerdmetall(en)) über 5 liegt, und
   - einem Halogendonor, der aus der Gruppe der Alkylaluminiumhalogenide stammt, wobei Alkylaluminiumsesquihalogenide ausgenommen sind,

   **dadurch gekennzeichnet, dass**
   das katalytische System das Seltenerdmetall oder die Seltenerdmetalle in einer Konzentration von 0,005 mol/l oder darüber enthält.

**2.** Katalytisches System nach Anspruch 1, **dadurch gekennzeichnet, dass** es das Seltenerdmetall oder die Seltenerdmetalle in einer Konzentration von 0,010 bis 0,060 mol/l enthält.

**3.** Katalytisches System nach einem der vorhergehenden Ansprüche, **dadurch gekennzeichnet, dass** das Salz ein Tris[bis(2-ethylhexyl)phosphat] des Seltenerdmetalls oder der Seltenerdmetalle ist.

**4.** Katalytisches System nach einem der vorhergehenden Ansprüche, **dadurch gekennzeichnet, dass** das Salz das Neodym-tris[bis(2-ethylhexyl)phosphat] ist.

**5.** Katalytisches System nach einem der vorhergehenden Ansprüche, **dadurch gekennzeichnet, dass** das Molverhältnis (Alkylierungsmittel/Salz von Seltenerdmetall(en)) im Bereich von 5 bis 10 liegt.

**6.** Katalytisches System nach einem der vorhergehenden Ansprüche, **dadurch gekennzeichnet, dass** das Molverhältnis (Halogendonor/Salz) im Bereich von 2 bis 3,5 liegt.

**7.** Katalytisches System nach einem der vorhergehenden Ansprüche, **dadurch gekennzeichnet, dass** das Molverhältnis (konjugiertes Dienmonomer/Salz) im Bereich von 15 bis 70 liegt.

**8.** Katalytisches System nach einem der vorhergehenden Ansprüche, **dadurch gekennzeichnet, dass** das konjugierte Dienmonomer das Butadien ist.

**9.** Katalytisches System nach einem der vorhergehenden Ansprüche, **dadurch gekennzeichnet, dass** der Halogendonor ein Alkylaluminiummonohalogenid ist.

**10.** Katalytisches System nach Anspruch 9, **dadurch gekennzeichnet, dass** der Halogendonor das Diethylaluminiumchlorid ist.

**11.** Katalytisches System nach Anspruch 10, **dadurch gekennzeichnet, dass** das Alkylierungsmittel das Diisobutylaluminiumhydrid ist.

**12.** Verfahren zur Herstellung eines katalytischen Systems nach einem der vorhergehenden Ansprüche, **dadurch gekennzeichnet, dass** es die folgenden Schritte umfasst:

- in einem ersten optionalen Schritt der Solvatisierung wird eine Suspension des Salzes des Seltenerdmetalls oder der Seltenerdmetalle in dem Lösungsmittel hergestellt,
- in einem zweiten Schritt wird zu der in dem ersten Schritt hergestellten Suspension das konjugierte Dienmonomer zugegeben, oder, falls der erste Schritt nicht durchgeführt wurde, gibt man zu dem Salz das Lösungsmittel und außerdem das konjugierte Dienmonomer,
- in einem dritten Schritt arbeitet man zur Bildung eines alkylierten Salzes das Alkylierungsmittel in die nach dem zweiten Schritt erhaltene Suspension ein, und
- in einem vierten Schritt gibt man den Halogendonor zu dem alkylierten Salz.

**13.** Verfahren zur Herstellung eines Polybutadiens, **dadurch gekennzeichnet, dass** es darin besteht, ein katalytisches System nach einem der Ansprüche 1 bis 11 in einem inerten Lösungsmittel auf Kohlenwasserstoffbasis in Gegenwart des Polybutadiens so reagieren zu lassen, dass das erhaltene Polybutadien einen Polydispersitätsindex Ip, der mit Gelchromatographie (SEC) ermittelt wird, unter 2,1 aufweist.

**14.** Verfahren zur Herstellung eines Polybutadiens nach Anspruch 13, **dadurch gekennzeichnet, dass** das Polybutadien ferner bei 100 °C eine Mooney-Viskosität ML(1+4), die nach der Norm ASTM D 1646 bestimmt wird, aufweist, die mindestens 40 beträgt.

**Claims**

**1.** A catalytic system usable for the preparation of polybutadienes by polymerisation, based on at least:

- a conjugated diene monomer,
- an organic phosphoric acid salt of one or more rare earth metals, said salt being in suspension in at least one inert, saturated and aliphatic or alicyclic hydrocarbon solvent,
- an alkylating agent consisting of an alkylaluminium of formula $AlR_3$ or $HAlR_2$, the "alkylating agent:rare earth salt(s)" molar ratio being greater than 5, and
- a halogen donor which belongs to the family of alkylaluminium halides with the exception of alkylaluminium sesquihalides,

   **characterised in that** said catalytic system comprises said rare earth metal(s) in a concentration equal to or greater than 0.005 mol/l.

2. A catalytic system according to Claim 1, **characterised in that** it comprises said rare earth metal(s) in a concentration within a range from 0.010 mol/l to 0.060 mol/l.

3. A catalytic system according to one of the preceding claims, **characterised in that** said salt is a rare earth tris[bis(2-ethylhexyl)phosphate].

4. A catalytic system according to one of the preceding claims, **characterised in that** said salt is neodymium tris[bis(2-ethylhexyl)phosphate].

5. A catalytic system according to one of the preceding claims, **characterised in that** said "alkylating agent:rare earth salt" molar ratio is strictly between 5 and 10.

6. A catalytic system according to one of the preceding claims, **characterised in that** the "halogen donor:salt" molar ratio exhibits a value ranging from 2 to 3.5.

7. A catalytic system according to one of the preceding claims, **characterised in that** the "conjugated diene monomensalt" molar ratio exhibits a value ranging from 15 to 70.

8. A catalytic system according to one of the preceding claims, **characterised in that** said conjugated diene monomer is butadiene.

9. A catalytic system according to one of the preceding claims, **characterised in that** said halogen donor is an alkylaluminium monohalide.

10. A catalytic system according to Claim 9, **characterised in that** said halogen donor is diethylaluminium chloride.

11. A catalytic system according to Claim 10, **characterised in that** said alkylating agent is diisobutylaluminium hydride.

12. A process for the preparation of a catalytic system according to one of the preceding claims, **characterised in that** it comprises the following steps:

   - in a first, optional step, a suspension of said rare earth salt in said solvent is produced,
   - in a second step, there is added to the suspension obtained in the first step said conjugated diene monomer or alternatively, in the case where the first step has not been carried out, said solvent is added to said salt in addition to said conjugated diene monomer,
   - in a third step, said alkylating agent is added to the suspension obtained at the end of said second step in order to obtain an alkylated salt, and
   - in a fourth step, said halogen donor is added to said alkylated salt.

13. A process for the preparation of a polybutadiene, **characterised in that** it consists of reacting a catalytic system according to one of Claims 1 to 11 in an inert hydrocarbon solvent in the presence of butadiene, so that the polybutadiene obtained has a polydispersity index Ip, measured by size exclusion chromatography, which is less than 2.1.

14. A process for the preparation of a polybutadiene according to Claim 13, **characterised in that** said polybutadiene furthermore has a Mooney viscosity ML(1+4) at 100°C, measured in accordance with Standard ASTM D 1646, which is equal to or greater than 40.